# EUROPEAN PATENT APPLICATION

(11) **EP 4 571 885 A1**
(43) Date of publication of application: **18.06.2025**
(21) Application number: 23870638.6
(22) Date of filing: 22.09.2023
(51) Int. Cl.: H01M 4/525, H01M 4/505, H01M 10/0525

(54) **ELECTRODE MATERIAL AND PREPARATION METHOD THEREFOR, AND ELECTRODE MATERIAL PRECURSOR AND PREPARATION METHOD THEREFOR**

(30) Priority: 27.09.2022 CN 202211183797
(71) Applicant: Huawei Technologies Co., Ltd., Shenzhen, Guangdong 518129 (CN); University of Science and Technology of China, Anhui 230026 (CN)
(72) Inventor: XU, Ruoyu, Shenzhen, Guangdong 518129 (CN); WANG, Bo, Shenzhen, Guangdong 518129 (CN); LU, Yuyang, Hefei, Anhui 230026 (CN); XIA, Shengan, Shenzhen, Guangdong 518129 (CN); NI, Yong, Hefei, Anhui 230026 (CN)
(74) Representative: Körber, Martin Hans
(86) International application number: PCT/CN2023/120788
(87) International publication number: WO 2024/067407

(57) **Abstract**

Embodiments of this application provide an electrode material. The electrode material includes a secondary particle formed by aggregating a plurality of primary particles, the secondary particle includes an inner layer and an outer layer that wraps an outer side of the inner layer, and an average particle size of primary particles at the inner layer is greater than an average particle size of primary particles at the outer layer. The electrode material can homogenize stress distribution of the secondary particle in a charging and discharging process, to suppress a grain boundary cracking phenomenon to some extent, improve cycle stability of the material, and improve battery performance. Embodiments of this application further provide an electrode material preparation method, an electrode material precursor, and an electrode material precursor preparation method.

## Description

This application claims priority to Chinese Patent Application No. 202211183797.4, filed with the China National Intellectual Property Administration on September 27, 2022 and entitled "ELECTRODE MATERIAL, ELECTRODE MATERIAL PREPARATION METHOD, ELECTRODE MATERIAL PRECURSOR, AND ELECTRODE MATERIAL PRECURSOR PREPARATION METHOD", which is incorporated herein by reference in its entirety.

### TECHNICAL FIELD

Embodiments of this application relate to the field of rechargeable battery technologies, and in particular, to an electrode material, an electrode material preparation method, an electrode material precursor, and an electrode material precursor preparation method.

### BACKGROUND

With popularity of smartphones and electric vehicles, battery performance improvement increasingly arouses attention in the industry. Currently, a commercial lithium-ion battery mainly includes a positive electrode material, a negative electrode material, an electrolyte, and a separator. Electrochemical performance of the positive electrode material and the negative electrode material directly affects final performance of the battery.

A ternary polycrystalline positive electrode material is considered as one of optimal choices for a positive electrode material of an electric vehicle due to a large capacity, good cycle performance, and a moderate price. However, compared with two types of positive electrode materials, namely, lithium cobaltate and lithium iron phosphate, the ternary polycrystalline positive electrode material has an anisotropic lattice change caused by a phase change of the material in a battery charging and discharging process, and consequently, stress distribution inside the material is uneven, and a grain boundary is likely to crack. As a result, a secondary particle breaks, and a specific surface area and an interface side reaction rapidly increase. Finally, a battery impedance increases, and performance rapidly deteriorates. Therefore, it is necessary to provide a polycrystalline positive electrode material, to homogenize stress distribution of the polycrystalline positive electrode material in a charging and discharging process, so as to suppress a grain boundary cracking phenomenon and improve battery performance.

### SUMMARY

In view of this, embodiments of this application provide an electrode material. The electrode material can homogenize stress distribution of a secondary particle in a charging and discharging process, to suppress a grain boundary cracking phenomenon to some extent, improve cycle stability of the material, and improve battery performance.

Specifically, a first aspect of embodiments of this application provides an electrode material. The electrode material includes a secondary particle formed by aggregating a plurality of primary particles, the secondary particle includes an inner layer and an outer layer that wraps an outer side of the inner layer, and an average particle size of primary particles at the inner layer is greater than an average particle size of primary particles at the outer layer.

According to the electrode material provided in embodiments of this application, distribution of the primary particles inside the secondary particle is set as follows: The average particle size of the primary particles at the inner layer is greater than the average particle size of the primary particles at the outer layer. Such a structure can make a grain boundary density of the inner layer of the secondary particle less than a grain boundary density of the outer layer, to effectively disperse volumetric strain caused by metal ion embedding and removal in the secondary particle, homogenize stress distribution inside the secondary particle, suppress cracking of a grain boundary, suppress breaking of the secondary particle, and improve cycle stability of the material. In addition, such a structure can make metal ions distributed more evenly in the secondary particle in a charging state, to effectively improve rate performance of the material.

In an implementation of this application, the secondary particle is a spherical or spheroidal particle. A spheroidal shape is a shape similar to a spherical shape.

In an implementation of this application, a total radial distance between a center of the secondary particle and any point on a surface of the secondary particle is R, the outer layer is an area corresponding to a length of 20%R to 60%R of extension from the surface of the secondary particle to the center, and the inner layer is an area corresponding to a length of 40%R to 80%R of extension from the center of the secondary particle to the surface.

In an implementation of this application, the average particle size of the primary particles at the inner layer is 0.01R' to 1.4R', and R' is half of a longest diameter of the secondary particle.

In an implementation of this application, the average particle size of the primary particles at the outer layer is 0.001R' to 0.3R', and R' is half of a longest diameter of the secondary particle.

In an implementation of this application, the inner layer includes a doping element that promotes grain growth, and/or the outer layer includes a doping element that suppresses grain growth.

In an implementation of this application, the doping element that promotes grain growth includes one or more of strontium (Sr), cerium (Ce), bismuth (Bi), and magnesium (Mg); and the doping element that suppresses grain growth includes one or more of boron (B), phosphorus (P), titanium (Ti), zirconium (Zr), niobium (Nb), antimony (Sb), tantalum (Ta), molybdenum (Mo), and tungsten (W).

In an implementation of this application, in the secondary particle, total molar content of the doping element that promotes grain growth and the doping element that suppresses grain growth is 0.1 mol% to 1 mol%.

In an implementation of this application, an average particle size of the primary particles is 10 nm to 60 µm.

In an implementation of this application, an average particle size of the secondary particles is 1 µm to 200 µm.

In an implementation of this application, the secondary particle includes a metal oxide used for a positive electrode of a battery.

In an implementation of this application, the metal oxide used for the positive electrode of the battery is a metal oxide used for a positive electrode of a lithium ion battery, a metal oxide used for a positive electrode of a sodium ion battery, a metal oxide used for a positive electrode of a potassium ion battery, or a metal oxide used for a positive electrode of a magnesium ion battery.

In an implementation of this application, the metal oxide used for the positive electrode of the lithium ion battery includes one or more of a lithium cobalt oxide, a lithium nickel oxide, a lithium manganese oxide, a lithium titanium oxide, a lithium iron phosphorus oxide, a lithium nickel cobalt oxide, a lithium nickel manganese oxide, and a nickel cobalt multi-oxide.

In an implementation of this application, an outermost side of the outer layer includes an oxide of the doping element that suppresses grain growth.

In an implementation of this application, the electrode material further includes a protective layer that wraps the surface of the secondary particle.

A second aspect of embodiments of this application provides an electrode material preparation method, including:
after mixing an electrode material precursor with metal salt, obtaining an electrode material through calcination, where the electrode material precursor includes an internal area and an external area that wraps the internal area, the internal area includes a doping element that promotes grain growth, and/or the external area includes a doping element that suppresses grain growth, the electrode material includes a secondary particle formed by aggregating a plurality of primary particles, the secondary particle includes an inner layer and an outer layer that wraps the inner layer, and an average particle size of primary particles at the inner layer is greater than an average particle size of primary particles at the outer layer.

In an implementation of this application, the calcination includes first calcination and second calcination that are sequentially performed, and a temperature of the first calcination is higher than a temperature of the second calcination.

In an implementation of this application, the temperature (T1) of the first calcination is 600°C to 1000°C, and the temperature (T2) of the second calcination is 400°C to 800°C.

In an implementation of this application, time of the first calcination is 2 to 4 hours, and time of the second calcination is 6 to 14 hours.

In an implementation of this application, the metal salt includes lithium salt, sodium salt, potassium salt, or magnesium salt.

In an implementation of this application, the electrode material precursor includes a metal oxide precursor used for a positive electrode of a battery.

In an implementation of this application, the metal oxide precursor used for the positive electrode of the battery includes a hydroxide precursor of a metal oxide, an oxide precursor of a metal oxide, a carbonate precursor of a metal oxide, or an oxyhydroxide precursor of a metal oxide.

A third aspect of embodiments of this application provides an electrode material precursor. The electrode material precursor includes a core layer and a shell layer that wraps the core layer, where the core layer includes a doping element that promotes grain growth, and/or the shell layer includes a doping element that suppresses grain growth.

In an implementation of this application, the electrode material precursor includes a metal oxide precursor used for a positive electrode of a battery.

In an implementation of this application, the metal oxide precursor used for the positive electrode of the battery includes a hydroxide precursor of a metal oxide, an oxide precursor of a metal oxide, a carbonate precursor of a metal oxide, or an oxyhydroxide precursor of a metal oxide.

In an implementation of this application, the doping element that promotes grain growth includes one or more of strontium (Sr), cerium (Ce), bismuth (Bi), and magnesium (Mg); and the doping element that suppresses grain growth includes one or more of boron (B), phosphorus (P), titanium (Ti), zirconium (Zr), niobium (Nb), antimony (Sb), tantalum (Ta), molybdenum (Mo), and tungsten (W).

A fourth aspect of embodiments of this application provides an electrode material precursor preparation method, including:
mixing a metal source solution of a core layer of an electrode material precursor with a precipitant and a complexing agent, to form a first raw material solution; and performing first co-precipitation reaction on the first raw material solution in an inert atmosphere, to obtain the core layer of the electrode material precursor;
mixing a metal source solution of a shell layer of the electrode material precursor with the precipitant and the complexing agent, to form a second raw material solution, where
the first raw material solution further includes a doping element source that promotes grain growth, and/or the second raw material solution further includes a doping element source that suppresses grain growth; and
after mixing the second raw material solution with the core layer of the electrode material precursor, performing second co-precipitation reaction in an inert atmosphere, and forming the shell layer on a surface of the core layer of the electrode material precursor, to obtain the electrode material precursor.

In an implementation of this application, the doping element source that promotes grain growth includes a compound containing one or more doping elements of strontium (Sr), cerium (Ce), bismuth (Bi), and magnesium (Mg); and the doping element source that suppresses grain growth includes a compound containing one or more doping elements of boron (B), phosphorus (P), titanium (Ti), zirconium (Zr), niobium (Nb), antimony (Sb), tantalum (Ta), molybdenum (Mo), and tungsten (W).

A fifth aspect of embodiments of this application provides an electrode plate. The electrode plate includes a current collector and an electrode active layer disposed on a surface of the current collector, and the electrode active layer includes the electrode material according to the first aspect of embodiments of this application.

A sixth aspect of embodiments of this application provides a battery. The battery includes the electrode material according to the first aspect of embodiments of this application, or includes the electrode plate according to the fifth aspect of embodiments of this application.

An embodiment of this application further provides an apparatus. The apparatus includes the battery according to the sixth aspect of embodiments of this application.

In an implementation of this application, the apparatus includes an electronic device, an energy storage system, or a vehicle.

### BRIEF DESCRIPTION OF DRAWINGS

FIG. 1 is a diagram of a stacking structure of primary grains of an existing polycrystalline positive electrode material 10;
FIG. 2 is a diagram of a cross-sectional structure of an electrode material 100 according to an embodiment of this application;
FIG. 3 is a diagram of distribution of an inner layer and an outer layer of a spherical electrode material 100 according to an embodiment of this application;
FIG. 4 is a diagram of distribution of an inner layer and an outer layer of a spheroidal electrode material 100 according to an embodiment of this application;
FIG. 5 is a diagram of a three-dimensional structure of an electrode material precursor 200 according to an embodiment of this application;
FIG. 6 is a diagram of a structure of an electrode plate 300 according to an embodiment of this application;
FIG. 7 is a diagram of a structure of a battery 400 according to an embodiment of this application;
FIG. 8 is a diagram of a structure of an apparatus 500 according to an embodiment of this application;
FIG. 9 is a diagram of a structure of an apparatus 500 according to another embodiment of this application;
FIG. 10 is a diagram of a structure of an apparatus 500 according to another embodiment of this application; and
FIG. 11 shows a result of crack extension lengths with respect to different quantities of cycles according to Embodiment 1 and Comparative embodiment 1 of this application.

### DESCRIPTION OF EMBODIMENTS

The following describes embodiments of this application with reference to the accompanying drawings in embodiments of this application.

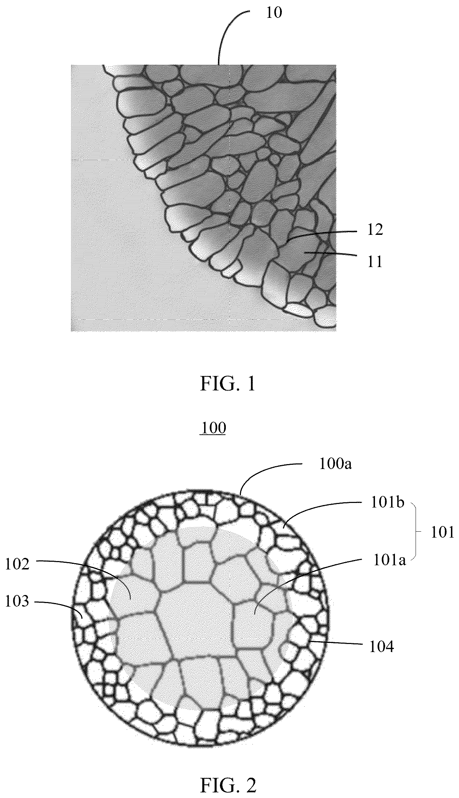

Refer to FIG. 1. FIG. 1 is a diagram of a stacking structure of primary grains of an existing polycrystalline positive electrode material 10. The polycrystalline positive electrode material 10 is usually formed by stacking and agglomerating a plurality of primary grains 11. A grain boundary 12 is distributed inside the polycrystalline positive electrode material 10, and the grain boundary 12 refers to an interface between primary grains. In a charging and discharging process, a change of a crystal structure of the polycrystalline positive electrode material 10 causes a change of a lattice volume of the material, and consequently, a volume of the primary grain 11 continuously expands and shrinks in the charging and discharging process. Such volumetric strain caused by ion embedding and removal accumulates at the grain boundary 12 of the primary grain 11, causing a crack in a secondary particle. The crack of the secondary particle in a long cycle process causes cycle performance attenuation and an internal resistance increase of the material. In addition, phase change occurs at an interface of the secondary particle after cracking. As a result, a side reaction of an electrolyte intensifies, and cycle stability of the material is reduced. To resolve a problem that an existing polycrystalline positive electrode material is prone to a crack in a charging and discharging cycle process, this application provides an electrode material. The electrode material can homogenize stress distribution inside a secondary particle of the electrode material in the charging and discharging process, to suppress a grain boundary cracking phenomenon to some extent, improve cycle stability of the material, and improve battery performance.

Refer to FIG. 2. FIG. 2 is a diagram of a structure of an electrode material 100 according to an embodiment of this application. The electrode material 100 includes a secondary particle 100a formed by aggregating a plurality of primary particles 101 (that is, primary grains), that is, the electrode material 100 is a polycrystalline electrode material. The secondary particle 100a includes an inner layer 102 and an outer layer 103 that wraps an outer side of the inner layer 102. An average particle size of primary particles 101a at the inner layer 102 is greater than an average particle size of primary particles 101b at the outer layer 103. An interface between primary particles 101 forms a grain boundary 104. For ease of understanding, in FIG. 2, a gray shadow area is used to represent an area of the inner layer 102, and an area other than the gray shadow area is an area of the outer layer 103.

According to the electrode material 100 provided in embodiments of this application, distribution of the primary particles 101 inside the secondary particle 100a is set as follows: The average particle size of the primary particles 101a at the inner layer 102 is greater than the average particle size of the primary particles 101b at the outer layer 103. Such a structure can make a grain boundary density of the inner layer 102 of the secondary particle 100a less than a grain boundary density of the outer layer 103, to effectively disperse volumetric strain caused by metal ion embedding and removal in the secondary particle 100a, homogenize stress distribution inside the secondary particle 100a, suppress cracking of the grain boundary 104, suppress breaking of the secondary particle 100a, and improve cycle stability of the material. In addition, such a structure can make metal ions distributed more evenly in the secondary particle 100a in a charging state, to effectively improve rate performance of the material.

In an implementation of this application, the secondary particle 100a is a spherical or spheroidal particle. A spheroidal shape is a shape similar to a spherical shape, for example, an ellipsoidal shape.

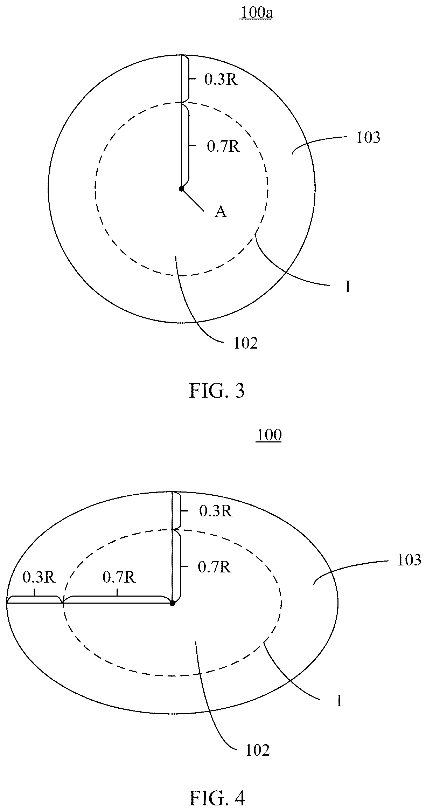

Refer to FIG. 3. In an implementation of this application, a total radial distance between a center A of the secondary particle 100a and any point on a surface of the secondary particle 100a is defined as R, where the center A of the secondary particle 100a is a midpoint of a longest diameter (that is, a longest diameter) of the secondary particle 100a. The outer layer 103 is an area corresponding to a length of 20%R to 60%R of extension from the surface of the secondary particle 100a to the center A, and the inner layer 102 is an area corresponding to a length of 40%R to 80%R of extension from the center A of the secondary particle 100a to the surface. If a particle size of the primary particle at the inner layer 102 is too large, rate performance deteriorates. In addition, the crack occurs within a specific range inside the secondary particle and gradually extends. Area control on the inner layer 102 and the outer layer 103 with appropriate sizes can control an area with a relatively small grain boundary density inside the secondary particle in an appropriate proportion, to effectively suppress grain boundary cracking of the secondary particle in a charging and discharging cycle process, improve structure stability, and ensure that the secondary particle has relatively good rate performance, so that the rate performance and structure stability of the secondary particle are better balanced. Specifically, the outer layer 103 may be an area corresponding to a length of 20%R, 25%R, 30%R, 35%R, 40%R, 45%R, 50%R, 55%R, or 60%R of extension from the surface of the secondary particle 100a to the center A. Correspondingly, the inner layer 102 is an area corresponding to a length of 80%R, 75%R, 70%R, 65%R, 60%R, 55%R, 50%R, 45%R, or 40%R of extension from the center A of the secondary particle to the surface. For example, in FIG. 2, the outer layer 103 is an area corresponding to a length of 30%R (that is, 0.3R) of extension from the surface of the secondary particle 100a to the center A (that is, an area outside a dashed line in the figure), and the inner layer 102 is an area corresponding to a length of 70%R (that is, 0.7R) of extension from the center A of the secondary particle 100a to the surface (that is, an area within the dashed line in the figure).

It may be understood that, for a regular spherical secondary particle, the total radial distance R between the center A of the secondary particle 100a and any point on the surface of the secondary particle 100a has an equal value, and R is a radius of a sphere. If the outer layer 103 is the area corresponding to the length of 30%R (that is, 0.3R) of extension from the surface of the secondary particle 100a to the center A, and the inner layer 102 is the area corresponding to the length of 70%R (that is, 0.7R) of extension from the center A of the secondary particle 100a to the surface, a division surface of the inner layer 102 and the outer layer 103 is a spherical surface corresponding to the secondary particle 100a that is proportionally scaled down to 0.7R in radial directions, an area from the division surface to the surface of the secondary particle is the outer layer, and an area from the division surface to the center of the secondary particle is the inner layer. For a spheroidal secondary particle, refer to FIG. 4. Total radial distances R between the center A of the secondary particle 100a and different points on the surface of the secondary particle 100a have unequal values. If the outer layer 103 is the area corresponding to the length of 30%R (that is, 0.3R) of extension from the surface of the secondary particle 100a to the center A, and the inner layer 102 is the area corresponding to the length of 70%R (that is, 0.7R) of extension from the center A of the secondary particle 100a to the surface, a division surface of the inner layer 102 and the outer layer 103 is a spheroidal surface corresponding to the secondary particle 100a that is proportionally scaled down to 0.7R in radial directions, for example, an interface I in FIG. 4 is the division surface of the inner layer 102 and the outer layer 103, an area from the division surface to the surface of the secondary particle is the outer layer, and an area from the division surface to the center of the secondary particle is the inner layer. In some implementations of this application, for the spherical secondary particle, the division surface of the inner layer 102 and the outer layer 103 may alternatively be an aspheric surface corresponding to the secondary particle 100a that is scaled down at different proportions in the radial directions; and for the spheroidal secondary particle, the division surface of the inner layer 102 and the outer layer 103 may alternatively be a spheroidal surface corresponding to the secondary particle 100a that is scaled down at different proportions in the radial directions.

In an implementation of this application, the primary particle 101 forming the secondary particle 100a may be a spherical or spheroidal particle, or may be a strip-shaped particle, for example, a strip-shaped particle with a length-width ratio of 1.1 to 4. In an implementation of this application, each primary particle 101 forming the secondary particle 100a has a particle size, and the average particle size of the primary particles 101 is an average value of particle sizes of all the primary particles. When a length-width ratio of the primary particle 101 is less than 2:1, the particle size of the primary particle 101 is a longest diameter of the primary particle. When a length-width ratio of the primary particle 101 is greater than or equal to 2:1, the particle size of the primary particle 101 is half of a sum of a longest diameter and a shortest diameter of the primary particle. The particle size of the primary particle 101 may be specifically obtained by performing scanning electron microscope characterization on a cross section of the secondary particle 100a. When a length-width ratio of the primary particle 101 in the cross section is less than 2:1, a longest diameter of the primary particle is recorded as the particle size of the primary particle 101. When a length-width ratio of the primary particle 101 in the cross section is greater than or equal to 2:1, a half of a sum of a longest diameter and a shortest diameter of the primary particle is recorded as the particle size of the primary particle 101. In an implementation of this application, the average particle size of the primary particles 101a at the inner layer 102 is 0.01R' to 1.4R', that is, an average value of particle sizes of the primary particles at the inner layer 102 is 0.01R' to 1.4R'. In an implementation of this application, the average particle size of the primary particles 101b at the outer layer 103 is 0.001R' to 0.3R', that is, an average value of particle sizes of the primary particles at the outer layer 103 is 0.001R' to 0.3R'. R' is half of the longest diameter of the secondary particle 100a. Using a spherical secondary particle with a particle size of 10 µm as an example, the average particle size of the primary particles 101a at the inner layer 102 may be 50 nm to 7 µm, and the average particle size of the primary particles 101b at the outer layer 103 may be 5 nm to 1.5 µm. Specifically, in an implementation of this application, the average particle size of the primary particles 101a at the inner layer 102 may be 0.01R', 0.02R', 0.03R', 0.05R', 0.08R', 0.1R', 0.15R', 0.2R', 0.3R', 0.4R', 0.5R', 0.6R', 0.7R', 0.8R', 0.9R', 1.0R', 1.1R', 1.2R', 1.3R', or 1.4R', and the average particle size of the primary particles 101b at the outer layer 103 may be 0.001R', 0.002R', 0.005R', 0.01R', 0.02R', 0.03R', 0.04R', 0.05R', 0.06R', 0.07R', 0.08R', 0.1R', 0.15R', 0.2R', 0.25R', or 0.3R'. The average particle sizes of the primary particles at the inner layer 102 and the outer layer 103 are controlled in appropriate proportions relative to R', so that the primary particles forming the entire secondary particle 100a have an appropriate quantity, so as to slow down stress accumulation between the primary particles caused by alkali metal ion embedding and removal in the secondary particle in a cycle process, and effectively suppress a phenomenon that the secondary particle cracks from the inside after a long cycle.

In an implementation of this application, the average particle size of the primary particles 101a at the inner layer 102 is greater than the average particle size of the primary particles 101b at the outer layer 103, that is, the inner layer 102 is formed by aggregating a plurality of primary particles 101a with a relatively large average particle size, and the outer layer 103 is formed by aggregating a plurality of primary particles 101b with a relatively small average particle size. In this way, the secondary particle 100a may form a structure with gradient distribution of grain boundary densities. Through boundary scale simulation, such a structure can effectively disperse volumetric strain caused by ion embedding and removal in the secondary particle, so as to suppress crack growth. In an implementation of this application, the average particle size of the primary particles 101a at the inner layer 102 may be 1.1 to 15 times the average particle size of the primary particles 101b at the outer layer 103. Specifically, the average particle size of the primary particles 101a at the inner layer 102 may be 1.1 times, 1.2 times, 1.3 times, 1.4 times, 1.5 times, 1.6 times, 1.7 times, 1.8 times, 1.9 times, 2 times, 3 times, 4 times, 5 times, 6 times, 7 times, 8 times, 9 times, 10 times, 11 times, 12 times, 13 times, 14 times, or 15 times the average particle size of the primary particles 101b at the outer layer 103. In some implementations, the average particle size of the primary particles 101a at the inner layer 102 is 2 to 10 times the average particle size of the primary particles 101b at the outer layer 103. In some implementations, the average particle size of the primary particles 101a at the inner layer 102 is 1.5 to 3 times the average particle size of the primary particles 101b at the outer layer 103. The average particle sizes of the primary particles at the inner layer 102 and the outer layer 103 are controlled to be appropriate relative sizes, so that a structure with appropriate gradient distribution of grain boundary densities can be obtained, the larger-size primary particles at the inner layer 102 are better used to suppress the secondary particle from cracking inside in a long charging and discharging cycle process, and the rate performance of the material can be improved. An excessively large particle size of the primary particle at the inner layer affects the rate performance and capacity exertion of the material.

In an implementation of this application, in the secondary particle 100a, an average particle size of the primary particles 101 is 10 nm to 60 µm. In an implementation of this application, the average particle size of the primary particles 101a at the inner layer 102 is 200 nm to 60 µm. For a secondary particle with a size of about 10 µm (for example, 7 µm to 13 µm), an average particle size range of primary particles at an inner layer of the secondary particle may be 800 nm to 3 µm. In an implementation of this application, the average particle size of the primary particles 101b at the outer layer 103 is 10 nm to 20 µm. For a secondary particle with a size of about 10 µm, an average particle size range of primary particles at an outer layer of the secondary particle may be 100 nm to 1.5 µm.

In an implementation of this application, the inner layer 102 includes a doping element that promotes grain growth, and/or the outer layer 103 includes a doping element that suppresses grain growth. In an implementation of this application, the doping element that promotes grain growth may include but is not limited to one or more of strontium (Sr), cerium (Ce), bismuth (Bi), and magnesium (Mg); and the doping element that suppresses grain growth may include but is not limited to one or more of boron (B), phosphorus (P), titanium (Ti), zirconium (Zr), niobium (Nb), antimony (Sb), tantalum (Ta), molybdenum (Mo), and tungsten (W). The doping element that promotes grain growth is an element that can promote growth of a primary grain in a process of forming the secondary particle and that is different from an element contained in an electrode material compound at the inner layer; and the doping element that suppresses grain growth is an element that can suppress growth of a primary grain and refine a grain size in a process of forming the secondary particle and that is different from an element contained in an electrode material compound at the outer layer. For example, the secondary particle includes an electrode material compound lithium nickel cobalt manganese oxide, and the secondary particle further includes the element strontium (Sr) doped in the inner layer 102 and the element titanium (Ti) doped in the outer layer 103. In embodiments of this application, the foregoing specific elements may be doped in different areas inside and outside an electrode material precursor, to regulate average particle sizes of primary grains in a polycrystalline structure of a calcined electrode material to be distributed in gradients on inner and outer sides.

In some implementations of this application, the inner layer 102 includes a doping element that promotes grain growth, and the outer layer 103 does not include a doping element that suppresses grain growth. In these implementations, in a process of forming the secondary particle, the inner layer 102 may obtain, under the action of the doping element that promotes grain growth, primary particles whose average particle size is larger than that of the outer layer 103, to form a structure with gradient distribution of average particle sizes of inner and outer primary particles. In some other implementations of this application, the outer layer 103 includes a doping element that suppresses grain growth, and the inner layer 102 does not include a doping element that promotes grain growth. In these implementations, in a process of forming the secondary particle, the outer layer 103 may obtain, under the action of the doping element that suppresses grain growth, primary particles whose average particle size is smaller than that of the inner layer 102, to form a structure with gradient distribution of average particle sizes of inner and outer primary particles. In some other implementations of this application, the inner layer 102 includes a doping element that promotes grain growth, and the outer layer 103 includes a doping element that suppresses grain growth. In these implementations, in a process of forming the secondary particle, a structure with gradient distribution of average particle sizes of inner and outer primary particles can be obtained with a larger difference between the average particle sizes of the primary particles at the inner layer 102 and the outer layer 103.

In some implementations of this application, the inner layer 102 may include, due to element diffusion, a small quantity of doping elements that are diffused from the outer layer 103 and that suppress grain growth. In some implementations of this application, the outer layer 103 may also include, due to element diffusion, a small quantity of doping elements that are diffused from the inner layer 102 and that promote grain growth.

In an implementation of this application, in the secondary particle 100a, total molar content of the doping element that promotes grain growth and the doping element that suppresses grain growth is 0.1 mol% to 1 mol%. In a specific embodiment, in the secondary particle 100a, the total molar content of the doping element that promotes grain growth and the doping element that suppresses grain growth may be, for example, 0.1 mol%, 0.2 mol%, 0.3 mol%, 0.4 mol%, 0.5 mol%, 0.6 mol%, 0.7 mol%, 0.8 mol%, 0.9 mol%, or 1 mol%. In some embodiments, in the secondary particle 100a, total molar content of the doping element that promotes grain growth and the doping element that suppresses grain growth is 0.2 mol% to 0.5 mol%. Control suitable for the content of the doping elements can not only enable the secondary particle to obtain a structure with gradient distribution of average particle sizes of inner and outer primary particles, but also well avoid negative impact of the doping elements on performance such as a capacity of the electrode material.

In an implementation of this application, an average particle size of the secondary particles 100a is 1 µm to 200 µm. In some embodiments, the average particle size of the secondary particles 100a may be, for example, 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 90 µm, 100 µm, 110 µm, 120 µm, 130 µm, 140 µm, 150 µm, 160 µm, 170 µm, 180 µm, 190 µm, or 200 µm.

In an implementation of this application, the electrode material may be a positive electrode material of a battery, or may be a negative electrode material of a battery. The electrode material may be an electrode material of a lithium ion battery, an electrode material of a sodium ion battery, an electrode material of a potassium ion battery, or an electrode material of a magnesium ion battery. In some implementations of this application, the secondary particle 100a includes a metal oxide used for a positive electrode of a battery. The metal oxide used for the positive electrode of the battery may be a metal oxide used for a positive electrode of a lithium ion battery, a metal oxide used for a positive electrode of a sodium ion battery, a metal oxide used for a positive electrode of a potassium ion battery, or a metal oxide used for a positive electrode of a magnesium ion battery. Specifically, the metal oxide used for the positive electrode of the battery may be a composite oxide that contains an alkali metal or an alkaline-earth metal. In an implementation of this application, the inner layer 102 and the outer layer 103 of the secondary particle 100a may include a same metal oxide used for the positive electrode of the battery, or may include different metal oxides used for the positive electrode of the battery.

In an implementation of this application, the metal oxide used for the positive electrode of the lithium ion battery includes a lithium-containing composite oxide, and the lithium-containing composite oxide includes one or more of a lithium cobalt oxide (for example, lithium cobaltate LiCoO₂), a lithium nickel oxide (for example, lithium nickelate LiNiO₂), a lithium manganese oxide (for example, lithium manganate LiMnO₂ or lithium permanganate), a lithium titanium oxide (for example, lithium titanate), a lithium iron phosphorus oxide (for example, lithium iron phosphate), a lithium nickel cobalt oxide (for example, lithium nickel cobalt oxide LiNiₐCo₁₋ₐO₂), a lithium nickel manganese oxide (for example, lithium nickel manganese oxide LiNiₐMn₁₋ₐO₂), a nickel cobalt multi-oxide (for example, lithium nickel cobalt manganese oxide LiNiₐCo_{b}Mn_{1-a-b}O₂, lithium nickel cobalt aluminum oxide LiNiₐCo_{b}Al_{1-a-b}O₂, or lithium nickel cobalt manganese aluminum oxide LiNiₐCo_{b}Mn_{c}Al_{1-a-b-c}O₂), where 0<a<1, 0<b<1, 0<c<1, 0<1-a-b<1, and 0<1-a-b-c<1. The lithium-containing composite oxide may be a lithium-containing oxide with a stoichiometric ratio, or may be a lithium-containing oxide with a non-stoichiometric ratio. For example, in an electrode material Li_{η}NiₐCo_{b}Mn_{c}Al_{1-a-b-c}O₂ of a lithium ion battery, η may be any value greater than 0 and less than or equal to 2, 0≤a≤1, 0≤b≤1, 0≤c≤1, and 0≤1-a-b-c≤1.

In an implementation of this application, the metal oxide used for the positive electrode of the sodium ion battery includes a sodium-containing composite oxide, and the sodium-containing composite oxide includes a sodium-containing transition metal oxide, and may be one or more of a sodium manganese oxide, a sodium copper iron manganese oxide, a sodium nickel iron manganese oxide, and a sodium copper nickel iron manganese oxide.

In an implementation of this application, the metal oxide used for the positive electrode of the potassium ion battery includes a potassium-containing composite oxide, and the potassium-containing composite oxide may be, for example, a potassium cobalt oxide, a potassium manganese oxide, or a potassium iron manganese oxide. In an implementation of this application, the metal oxide used for the positive electrode of the magnesium ion battery includes a magnesium-containing composite oxide. The magnesium-containing composite oxide may be, for example, a magnesium vanadium oxide, a magnesium cobalt manganese oxide, a magnesium nickel manganese oxide, a magnesium manganese oxide, or a magnesium iron manganese oxide.

In some implementations of this application, an outermost side of the outer layer 103 (that is, a periphery away from a center of the secondary particle) includes an oxide of the doping element that suppresses grain growth. This is mainly because the doping element of the outer layer 103 is segregated to the surface of the secondary particle and is formed through oxidation, and formation of the oxide of the doping element on the outermost side of the outer layer 103 helps improve cycle performance of the secondary particle and reduce a surface side reaction.

In consideration of structural stability and electrochemical performance of the electrode material, a protective layer may be further disposed on the surface of the secondary particle 100a of the electrode material in embodiments of this application as required. The protective layer may include, for example, a metal oxide. The metal oxide may be, for example, a magnesium oxide, an aluminum oxide, or a titanium dioxide. The protective layer can reduce the surface side reaction of the secondary particle and improve the cycle performance of the secondary particle.

An embodiment of this application further provides an electrode material preparation method, including:
after mixing an electrode material precursor with metal salt, obtaining an electrode material through calcination, where the electrode material precursor includes a core layer and a shell layer that wraps the core layer, the core layer includes a doping element that promotes grain growth, and/or the shell layer includes a doping element that suppresses grain growth, the electrode material includes a secondary particle formed by aggregating a plurality of primary particles, the secondary particle includes an inner layer and an outer layer that wraps the inner layer, and an average particle size of primary particles at the inner layer is greater than an average particle size of primary particles at the outer layer.

In an implementation of this application, the calcination includes first calcination and second calcination that are sequentially performed, and a temperature of the first calcination is higher than a temperature of the second calcination. In some implementations of this application, the first calcination is high-temperature calcination, and a temperature (T1) is 600°C to 1000°C; and the second calcination is medium-temperature calcination, and a temperature (T2) is 400°C to 800°C. In an implementation of this application, the temperature of the first calcination is at least 100°C higher than the temperature of the second calcination. Time of the second calcination is longer than time of the first calcination. The time of the first calcination may be 2 to 4 hours, for example, 2 hours, 2.5 hours, 3 hours, 3.5 hours, or 4 hours. The time of the second calcination may be 6 to 14 hours, for example, 6 hours, 7 hours, 8 hours, 9 hours, 10 hours, 11 hours, 12 hours, 13 hours, or 14 hours. A crystal can be quickly nucleated by first performing short-time calcination in a high-temperature calcination area. A size of a primary grain can be slowly increased by performing long-time calcination in a medium-temperature calcination area. Compared with a conventional calcination process, two-stage calcination can increase the particle size of the primary grain and reduce surface mixing of the material.

In an implementation of this application, the metal salt includes lithium salt, sodium salt, potassium salt, or magnesium salt. A type of the metal salt is specifically determined based on a type of an electrode material to be prepared finally. For example, if an electrode material of a lithium ion battery is pre-prepared, the metal salt is the lithium salt, and the lithium salt may be specifically one or more of lithium nitrate, lithium hydroxide, and lithium carbonate. The lithium salt may be added based on a molar ratio of 1:(1 to 1.1) of a non-lithium metal (for example, a transition metal Ni, Co, or Mn) in the electrode material precursor to lithium. Content of a transition metal element in the electrode material precursor may be obtained through ICP (Inductive Coupled Plasma Emission Spectrometer, inductive coupled plasma emission spectrometer) characterization. If an electrode material of a sodium ion battery is pre-prepared, the metal salt is the sodium salt, and the sodium salt may be specifically one or more of sodium nitrate, sodium hydroxide, sodium carbonate, and a sodium supplement. If an electrode material of a potassium ion battery is pre-prepared, the metal salt is the potassium salt, and the potassium salt may be specifically one or more of potassium nitrate, potassium hydroxide, and potassium carbonate. If an electrode material of a magnesium ion battery is pre-prepared, the metal salt is the magnesium salt, and the magnesium salt may be specifically one or more of magnesium nitrate, magnesium hydroxide, and magnesium carbonate.

In an implementation of this application, a type of the electrode material precursor is specifically determined based on the type of the electrode material to be prepared finally. For example, if an electrode material of a lithium ion battery is pre-prepared, the electrode material precursor is an electrode material precursor of the lithium ion battery. If an electrode material of a sodium ion battery is pre-prepared, the electrode material precursor is an electrode material precursor of the sodium ion battery. If an electrode material of a potassium ion battery is pre-prepared, the electrode material precursor is an electrode material precursor of the potassium ion battery. If an electrode material of a magnesium ion battery is pre-prepared, the electrode material precursor is an electrode material precursor of the magnesium ion battery.

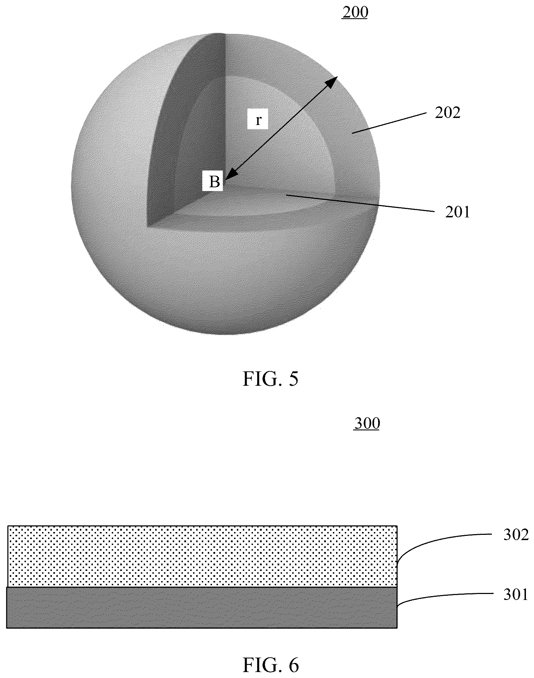

Refer to FIG. 5. An embodiment of this application further provides an electrode material precursor 200. The electrode material precursor 200 includes a core layer 201 and a shell layer 202 that wraps the core layer 201. That is, the core layer 201 is inside, and the shell layer 202 is outside. The core layer 201 includes a doping element that promotes grain growth, and/or the shell layer 202 includes a doping element that suppresses grain growth. The electrode material precursor used in the foregoing electrode material preparation method may be the electrode material precursor 200.

In an implementation of this application, the core layer 201 corresponds to the inner layer 102 of the secondary particle 100a that generates the electrode material 100, and the shell layer 202 corresponds to the outer layer 103 of the secondary particle 100a that generates the electrode material 100. Correspondingly, a total radial distance between a center B of the electrode material precursor 200 and any point on a surface of a particle of the electrode material precursor 200 is defined as r, where the center B of the electrode material precursor 200 is a midpoint of a longest diameter (that is, a longest diameter) of the electrode material precursor 200. The shell layer 202 is an area corresponding to a length of 20%r to 60%r of extension from the surface of the electrode material precursor 200 to the center B, and the inner layer 102 is an area corresponding to a length of 40%r to 80%r of extension from the center B of the electrode material precursor 200 to the surface. For specific area division of the core layer 201 and the shell layer 202, refer to division of the inner layer 102 and the outer layer 103 of the secondary particle 100a of the electrode material 100. Details are not described herein again.

In an implementation of this application, the core layer 201 includes a doping element that promotes grain growth, and/or the shell layer 202 includes a doping element that suppresses grain growth. In an implementation of this application, the doping element that promotes grain growth may include but is not limited to one or more of strontium (Sr), cerium (Ce), bismuth (Bi), and magnesium (Mg); and the doping element that suppresses grain growth may include but is not limited to one or more of boron (B), phosphorus (P), titanium (Ti), zirconium (Zr), niobium (Nb), antimony (Sb), tantalum (Ta), molybdenum (Mo), and tungsten (W). The doping element that promotes grain growth is an element that can promote growth of a primary grain in a process of forming the secondary particle of the electrode material and that is different from an element contained in an electrode material precursor compound at the core layer; and the doping element that suppresses grain growth is an element that can suppress growth of a primary grain in a process of forming the secondary particle of the electrode material and that is different from an element contained in an electrode material precursor compound at the shell layer. For example, the electrode material precursor includes its own electrode material precursor compound nickel cobalt manganese hydroxide, and further includes the element strontium (Sr) doped in the core layer 201 and the element titanium (Ti) doped in the shell layer 202.

In some implementations of this application, the core layer 201 includes a doping element that promotes grain growth, and the shell layer 202 does not include a doping element that suppresses grain growth. In some other implementations of this application, the shell layer 202 includes a doping element that suppresses grain growth, and the core layer 201 does not include a doping element that promotes grain growth. In some other implementations of this application, the core layer 201 includes a doping element that promotes grain growth, and the shell layer 202 includes a doping element that suppresses grain growth.

In an implementation of this application, in the electrode material precursor 200, total molar content of the doping element that promotes grain growth and the doping element that suppresses grain growth is 0.1 mol% to 1 mol%. In a specific embodiment, in the electrode material precursor 200, the total molar content of the doping element that promotes grain growth and the doping element that suppresses grain growth may be, for example, 0.1 mol%, 0.2 mol%, 0.3 mol%, 0.4 mol%, 0.5 mol%, 0.6 mol%, 0.7 mol%, 0.8 mol%, 0.9 mol%, or 1 mol%. In some embodiments, in the electrode material precursor 200, total molar content of the doping element that promotes grain growth and the doping element that suppresses grain growth is 0.2 mol% to 0.5 mol%.

In embodiments of this application, the foregoing specific elements are doped in preset areas on the inner and outer sides of the electrode material precursor, to regulate a gradient distribution structure in which an average particle size of primary particles is large inside and small outside in a polycrystalline structure of the calcined electrode material. This can effectively improve a grain boundary cracking phenomenon of the electrode material in a charging and discharging cycle process, and improve cycle stability of the secondary particle of the electrode material, and can further homogenize a concentration of cations (for example, lithium ions) in the electrode material in a charging state, and improve rate performance of the electrode material. In addition, the electrode material precursor is used to prepare the electrode material having the foregoing features, and a process is simple and controllable.

In an implementation of this application, the electrode material precursor 200 may be an electrode material precursor of a lithium ion battery, an electrode material precursor of a sodium ion battery, an electrode material precursor of a potassium ion battery, or an electrode material precursor of a magnesium ion battery. In some implementations of this application, the electrode material precursor 200 includes a metal oxide precursor used for a positive electrode of a battery. The metal oxide precursor used for the positive electrode of the battery may be specifically a hydroxide precursor of a metal oxide, an oxide precursor of a metal oxide, a carbonate precursor of a metal oxide, or an oxyhydroxide precursor of a metal oxide used in a positive electrode of the lithium ion battery, the sodium ion battery, the potassium ion battery, or the magnesium ion battery. For example, the electrode material precursor may include NiₓCo_{y}Mn_{1-x-y}(OH)₂, NiₓCo_{y}Al_{1-x-y}(OH)₂, NiₓCo_{y}Mn_{z}Al_{1-x-y-z}(OH)₂, or the like, where 0<x<1, 0<y<1, 0<z<1, 0<1-x-y<1, and 0<1-x-y-z<1. In a specific embodiment, the electrode material precursor 200 includes a particle including a compound NiₓCo_{y}Mn_{1-x-y}(OH)₂, a core layer of the particle includes a doping element strontium (Sr), and a shell layer includes a doping element titanium (Ti).

An embodiment of this application further provides an electrode material precursor preparation method, including:
mixing a metal source solution of a core layer of an electrode material precursor with a precipitant and a complexing agent, to form a first raw material solution; and performing first co-precipitation reaction on the first raw material solution in an inert atmosphere, to obtain the core layer of the electrode material precursor;
mixing a metal source solution of a shell layer of the electrode material precursor with the precipitant and the complexing agent, to form a second raw material solution, where
the first raw material solution further includes a doping element source that promotes grain growth, and/or the second raw material solution further includes a doping element source that suppresses grain growth; and
after mixing the second raw material solution with the core layer of the electrode material precursor, performing second co-precipitation reaction in an inert atmosphere, and forming the shell layer on a surface of the core layer of the electrode material precursor, to obtain the electrode material precursor.

In an implementation of this application, the metal source solution of the core layer of the electrode material precursor is a solution including a metal element of the core layer of the electrode material precursor. Similarly, the metal source solution of the shell layer of the electrode material precursor is a solution including a metal element of the shell layer of the electrode material precursor. For example, if both the core layer and the shell layer of the electrode material precursor include the compound NiₓCo_{y}Mn_{1-x-y}(OH)₂, the metal source solution is a solution including a nickel source, a cobalt source, or a manganese source. The metal source is soluble metal salt. For example, the nickel source is soluble nickel salt, and is specifically nickel sulfate. The cobalt source is soluble cobalt salt, and is specifically cobalt sulfate. The manganese source is soluble manganese salt, and is specifically manganese sulfate.

In an implementation of this application, the doping element source that promotes grain growth includes a compound that contains one or more doping elements of strontium (Sr), cerium (Ce), bismuth (Bi), and magnesium (Mg). Specifically, the doping element source that promotes grain growth may be metal salt that contains one or more doping elements of strontium (Sr), cerium (Ce), bismuth (Bi), and magnesium (Mg), for example, strontium salt, cerium salt, bismuth salt, or magnesium salt. In an implementation of this application, the doping element source that suppresses grain growth includes a compound that contains one or more doping elements of boron (B), phosphorus (P), titanium (Ti), zirconium (Zr), niobium (Nb), antimony (Sb), tantalum (Ta), molybdenum (Mo), and tungsten (W). Specifically, the doping element source that suppresses grain growth may be metal salt that contains one or more doping elements of boron (B), phosphorus (P), titanium (Ti), zirconium (Zr), niobium (Nb), antimony (Sb), tantalum (Ta), molybdenum (Mo), and tungsten (W), for example, boron salt, phosphorus salt, titanium salt, zirconium salt, niobium salt, antimony salt, tantalum salt, molybdenum salt, or tungsten salt.

In some implementations of this application, the first raw material solution includes a doping element source that promotes grain growth, and the second raw material solution does not include a doping element source that suppresses grain growth. In some other implementations of this application, the second raw material solution includes a doping element source that suppresses grain growth, and the first raw material solution does not include a doping element source that promotes grain growth. In some other implementations of this application, the first raw material solution includes a doping element source that promotes grain growth, and the second raw material solution includes a doping element source that suppresses grain growth.

In an implementation of this application, the precipitant may be a sodium hydroxide solution, and a molar concentration of the sodium hydroxide solution may be 2 mol/L to 4 mol/L; and the complexing agent may be an ammonia solution, and a mass concentration of the ammonia solution may be 8% to 12%. In an implementation of this application, pHs of the first raw material solution and the second raw material solution may be controlled to be between 10.0 and 12.0 by using ammonia water. In an implementation of this application, the inert atmosphere may be, for example, a nitrogen atmosphere.

Refer to FIG. 6. An embodiment of this application further provides an electrode plate 300. The electrode plate 300 includes a current collector 301 and an electrode active layer 302 disposed on the current collector 301. The electrode active layer 302 includes the foregoing electrode material 100 in this application. The current collector 301 may be an aluminum foil or the like. The electrode active layer 302 may further include a conductive agent, a binder, and the like.

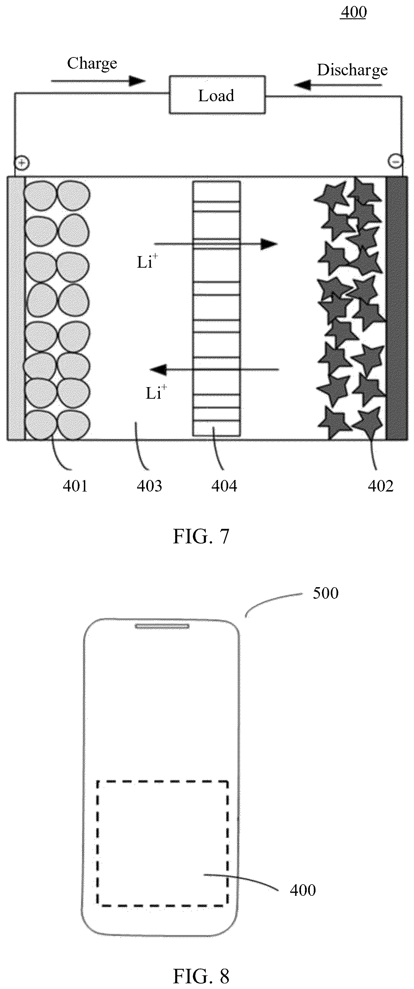

Refer to FIG. 7. An embodiment of this application further provides a battery 400. The battery 400 includes the electrode plate provided in the foregoing embodiments of this application, that is, includes the electrode material 100 provided in the foregoing embodiments of this application. The battery 400 may be a lithium ion rechargeable battery, a sodium ion rechargeable battery, a potassium ion rechargeable battery, a magnesium ion rechargeable battery, or the like. In some embodiments, the battery 400 includes a positive plate 401, a negative plate 402, an electrolyte 403, and a separator 404. Using a lithium ion battery as an example, in a charging process, under the action of an external circuit, lithium ions are detached from a positive active material, and are embedded into a negative electrode through the electrolyte and the separator. At the same time, a positive electrode loses electrons, which flow out of an external circuit through a current collector. In a reverse discharging process, lithium ions are detached from the negative electrode and return to the positive electrode, and electrons move from the negative electrode to the positive electrode through the external circuit and work for the outside.

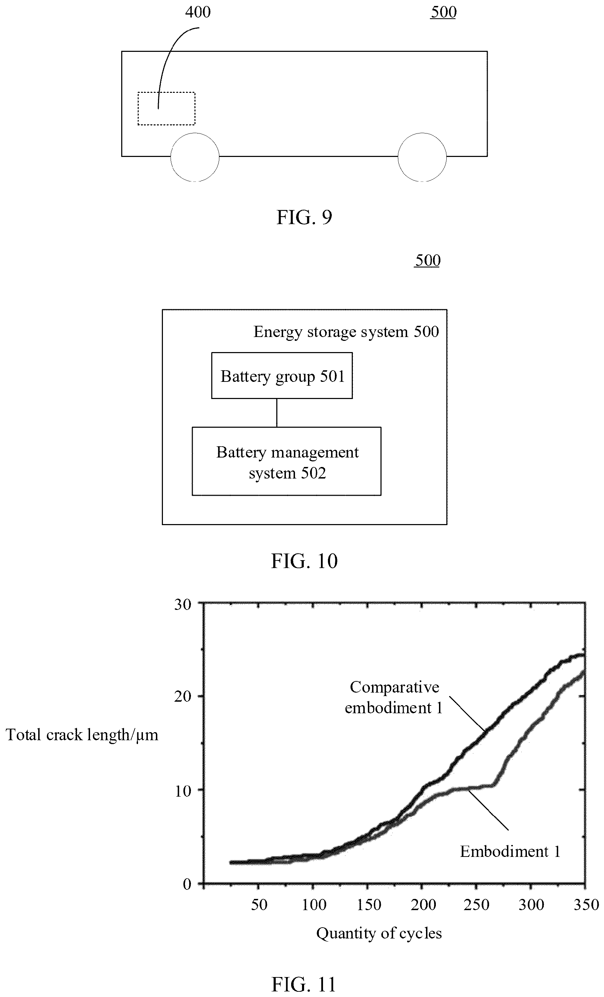

Refer to FIG. 8, FIG. 9, and FIG. 10. An embodiment of this application further provides an apparatus 500. The apparatus 500 includes the battery 400 provided in the foregoing embodiments of this application. For the apparatus 500, different electrochemical apparatuses may be selected based on an actual use requirement, such as a battery, a battery module, or a battery pack. In some implementations of this application, as shown in FIG. 8, the apparatus 500 is an electronic device. The electronic device may be various consumer electronic products, such as a mobile phone, a tablet computer, a mobile power supply, a portable computer, a notebook computer, another wearable or removable electronic device, a television, a video disc, a video recorder, a camcorder, a radio, a recorder, a combined speaker, a record player, a compact disc player, a home office device, and a home electronic health device. The electronic device includes the battery 400 provided in embodiments of this application, and the battery 400 supplies power to the electronic device. In some implementations of this application, as shown in FIG. 9, the apparatus 500 is a vehicle. The vehicle includes the battery 400 provided in the foregoing embodiments of this application. The battery 400 supplies power to the vehicle. The vehicle may be electric vehicles in various forms such as a pure electric vehicle, a hybrid electric vehicle, an electric bicycle, and an electric scooter. In some implementations of this application, as shown in FIG. 10, the apparatus 500 is an energy storage system. The energy storage system includes a battery group 501 and a battery management system 502 electrically connected to the battery group 501. The battery group 501 includes the battery 400 provided in the foregoing embodiments of this application.

Embodiments of this application are further described below by using a plurality of embodiments.

### Embodiment 1

1. A positive electrode material precursor Ni_{0.82}Co_{0.12}Mn_{0.06}(OH)₂ of a lithium ion battery is synthesized, and includes a core layer and a shell layer that wraps an outer side of the core layer. The core layer is doped with the element strontium (Sr), and the shell layer is doped with the element titanium (Ti).
   (1-1) Prepare a nickel-cobalt-manganese metal salt solution: Dissolve nickel sulfate salt, cobalt sulfate salt, and manganese sulfate salt at a molar ratio 82:12:6 of Ni, Co, and Mn to prepare a 2-mol/L evenly mixed nickel-cobalt-manganese metal salt solution; prepare an ammonia solution whose mass concentration is 10 wt.% and a sodium hydroxide solution whose concentration is 4 mol/L; prepare a strontium salt solution whose molar concentration is 0.05 mol/L; and prepare a titanium salt solution whose molar concentration is 0.05 mol/L.
   (1-2) Prepare an ammonia solution whose mass concentration is 10 wt.% and a sodium hydroxide solution whose concentration is 4 mol/L.
   (1-3) Prepare a strontium salt solution whose molar concentration is 0.05 mol/L.
   (1-4) Prepare a titanium salt solution whose molar concentration is 0.05 mol/L.
   (1-5) Add deionized water to a reactor, then add the prepared ammonia solution and sodium hydroxide solution to the reactor, adjust a temperature to 70°C, a pH value to 11.0, and a stirring speed to 300 rpm, then slowly add the nickel-cobalt-manganese metal solution and the strontium salt solution prepared in (1-1) and (1-3), and control a pH value of a solution to be 11.0 by using ammonia water.
   (1-6) After a precursor particle grows to a particle size of 7 µm, maintain the temperature to be 70°C, the pH value to be 11.0, and the stirring speed to be 300 rpm, and slowly inject the prepared ammonia solution and sodium hydroxide solution, and the nickel-cobalt-manganese metal solution and the titanium salt solution prepared in (1-1) and (1-4).
   (1-7) After the precursor particle grows to a particle size of 10 µm, performing washing and drying by using a weak alkaline solution and deionized water, to obtain the positive electrode material precursor Ni_{0.82}Co_{0.12}Mn_{0.06}(OH)₂, which includes the core layer and the shell layer that wraps the outer side of the core layer, where the core layer is doped with the element strontium (Sr), and the shell layer is doped with the element titanium (Ti).
2. A polycrystalline positive electrode material LiNi_{0.82}Co_{0.12}Mn_{0.06}O₂ is synthesized.
   (2-1) Fully mix the prepared positive electrode material precursor Ni_{0.82}Co_{0.12}Mn_{0.06}(OH)₂ with lithium hydroxide to obtain a mixture, where the lithium hydroxide is added based on a molar ratio 1:1.01 of transition metals (including Ni, Co, and Mn) in the precursor to lithium in the lithium hydroxide.
   (2-2) Calcine the mixture in (2-1) in a muff furnace, where a temperature of high-temperature calcination is 900°C, and calcination time is 6 hours; then decrease the temperature to 700°C and perform calcination for 10 hours, where a calcination atmosphere is a pure oxygen atmosphere; and perform natural cooling after the calcination ends.
   (2-3) Perform vacuum packaging after crushing, sieving, and demagnetizing powder obtained after cooling in (2-2), to obtain the polycrystalline positive electrode material LiNi_{0.82}Co_{0.12}Mn_{0.06}O₂.
3. Preparation of a positive electrode plate:
   The polycrystalline positive electrode material, polyvinylidene fluoride (PVDF), and a conductive agent super P are added to N-methylpyrrolidone (NMP) based on a mass ratio of 90:5:5, a slurry is obtained through full stirring and even mixing, the slurry is coated on an aluminum foil current collector, and the positive electrode plate is prepared through drying, cold pressing, and slitting.
4. Preparation of a lithium ion battery:
   A 2032 button battery is prepared by using the prepared positive electrode plate, a lithium plate, an electrolyte (1 mol/L LiPF₆), and a separator.

### Comparative embodiment 1

For synthesis of the positive electrode material precursor Ni_{0.82}Co_{0.12}Mn_{0.06}(OH)₂ of the lithium ion battery, a difference between Comparative embodiment 1 and Embodiment 1 only lies in that the strontium salt solution and the titanium salt solution in step (3) and step (4) are not added by segment in Comparative embodiment 1, but the strontium salt solution and the titanium salt solution are evenly mixed and then added in one step. Other operations are the same. An entire particle of the finally generated precursor Ni_{0.82}Co_{0.12}Mn_{0.06}(OH)₂ has evenly doped strontium and titanium.

According to a method that is the same as that in Embodiment 1, a positive electrode material LiNi_{0.82}Co_{0.12}Mn_{0.06}O₂ is prepared by using the positive electrode material precursor Ni_{0.82}Co_{0.12}Mn_{0.06}(OH)₂ in Comparative embodiment 1.

According to a method that is the same as that in Embodiment 1, a positive electrode plate and a lithium ion battery are prepared by using the positive electrode material LiNi_{0.82}Co_{0.12}Mn_{0.06}O₂ in Comparative embodiment 1.

A particle of the positive electrode material precursor and a particle of the polycrystalline positive electrode material prepared in Embodiment 1 are cut through FIB (Focused Ion beam, focused ion beam). Cross sections of the particle of the positive electrode material precursor and the particle of the polycrystalline positive electrode material in Embodiment 1 are observed through EDS energy-dispersive X-ray spectroscopy (Energy-dispersive X-ray spectroscopy), and it can be observed that clear signals of the element titanium exist on an outer side of the cross sections of the particle of the positive electrode material precursor and the particle of the polycrystalline positive electrode material, and clear signals of the element strontium exist on an inner side of the cross sections. An SEM (Scanning electron microscope, scanning electron microscope) is used to observe a cross-sectional morphology feature of the polycrystalline positive electrode material in Embodiment 1. It can be observed that an average particle size of primary particles on an inner side of the cross section of the polycrystalline positive electrode material is significantly greater than an average particle size of primary particles on an outer side, and grain boundary distribution on the outer side of the cross section is significantly denser than grain boundary distribution on the inner side of the cross section.

A particle of the positive electrode material precursor and a particle of the polycrystalline positive electrode material prepared in Comparative embodiment 1 are cut through FIB. Cross sections of the particle of the positive electrode material precursor and the particle of the polycrystalline positive electrode material in Comparative embodiment 1 are observed through EDS, and it can be observed that signals of strontium and titanium are evenly distributed on inner and outer sides of the cross sections of the particle of the positive electrode material precursor and the particle of the polycrystalline positive electrode material. An SEM is used to observe a cross-sectional morphology feature of the polycrystalline positive electrode material in Comparative embodiment 1. It can be observed that primary grains on the inner and outer sides of the cross section of the polycrystalline positive electrode material have an even particle size.

Under a condition of 25±5°C, a charge/discharge test is performed, at a charge/discharge rate of 0.1C/0.1C and a charge/discharge rate of 1C/1C within a voltage range of 3.0 V to 4.3 V, on the batteries prepared in Embodiment 1 and Comparative embodiment 1, and first-cycle charge/discharge capacities and retention ratios in 100 cycles that are of the batteries are recorded. A result is shown in Table 1.

**Table 1: Electrochemical performance of batteries in Embodiment 1 and Comparative embodiment 1**

| Sample | 0.1C charge specific capacity | 0.1C discharge specific capacity | 1C/0.1C discharge capacity ratio (rate performance) | 1C capacity retention ratio in 100 cycles |
|---|---|---|---|---|
| Embodiment 1 | 221 mAh/g | 209 mAh/g | 0.93 | 94.6% |
| Comparative embodiment 1 | 218 mAh/g | 198 mAh/g | 0.85 | 83.1% |

It can be learned from the result of Table 1 that, in embodiments of this application, the core layer and the shell layer of the positive electrode material precursor material are doped with different specific elements through step-by-step doping, so that in a process of forming a secondary particle of the polycrystalline positive electrode material, under the action of the specific doping elements, an average particle size of primary particles at an inner layer of the finally obtained polycrystalline positive electrode material can be greater than an average particle size of primary particles at an outer layer, that is, a structure with gradient distribution of the average particle sizes of the primary particles at the inner layer and the outer layer is formed. Compared with an even doping structure in Comparative embodiment 1, the electrode material having the structure with gradient distribution of the average particle sizes of the primary particles at the inner layer and the outer layer in embodiments of this application can effectively resolve a problem of cycle performance deterioration caused by grain boundary cracking of the secondary particle of the electrode material. The positive electrode material in Embodiment 1 of this application has better rate performance and a higher capacity retention ratio compared with that in Comparative embodiment 1.

The batteries prepared in Embodiment 1 and Comparative embodiment 1 are disassembled in different discharging states after 100 cycles, and scanning electron microscope (SEM) characterization is performed on cross sections of positive electrode material particles of the batteries. A result is shown in FIG. 11. FIG. 11 shows a result of crack extension lengths with respect to different quantities of cycles according to Embodiment 1 and Comparative embodiment 1. It can be learned from FIG. 11 that, as the quantity of cycles increases, a crack inside a secondary particle gradually grows, but a crack growth speed in Embodiment 1 is far lower than that in Comparative embodiment 1.

### Embodiment 2

1. A positive electrode material precursor Ni_{0.33}Fe_{0.33}Mn_{0.33}(OH)₂ of a sodium ion battery is synthesized, and includes a core layer and a shell layer that wraps an outer side of the core layer. The core layer is doped with the element magnesium (Mg), and the shell layer is doped with the element tungsten (W).
   (1-1) Prepare a nickel-cobalt-manganese metal salt solution: Dissolve nickel sulfate salt, iron sulfate salt, and manganese sulfate salt at a molar ratio 1:1:1 of Ni, Fe, and Mn to prepare a 2-mol/L evenly mixed nickel-cobalt-manganese metal salt solution.
   (1-2) Prepare an ammonia solution whose mass concentration is 10 wt.% and a sodium hydroxide solution whose concentration is 4 mol/L.
   (1-3) Prepare a magnesium salt solution whose molar concentration is 0.05 mol/L.
   (1-4) Prepare a tungsten salt solution whose molar concentration is 0.05 mol/L.
   (1-5) Add deionized water to a reactor, then add the prepared ammonia solution and sodium hydroxide solution to the reactor, adjust a temperature to 70°C, a pH value to 11.0, and a stirring speed to 300 rpm, then slowly add the nickel-iron-manganese metal solution and the magnesium salt solution prepared in (1-1) and (1-3), and control a pH value of a solution to be 11.0 by using ammonia water.
   (1-6) After a precursor particle grows to a particle size of 7 µm, maintain the temperature to be 70°C, the pH value to be 11.0, and the stirring speed to be 300 rpm, and slowly inject the prepared ammonia solution and sodium hydroxide solution, and the nickel-iron-manganese metal solution and the tungsten salt solution prepared in (1-1) and (1-4).
   (1-7) After the precursor particle grows to a particle size of 10 µm, performing washing and drying by using a weak alkaline solution and deionized water, to obtain the positive electrode material precursor Ni_{0.33}Fe_{0.33}Mn_{0.33}(OH)₂, which includes the core layer and the shell layer that wraps the outer side of the core layer, where the core layer is doped with the element magnesium (Mg), and the shell layer is doped with the element tungsten (W).
2. A polycrystalline positive electrode material NaNi_{0.33}Fe_{0.33}Mn_{0.33}O₂ is synthesized.
   (2-1) Fully mix the prepared positive electrode material precursor Ni_{0.33}Fe_{0.33}Mn_{0.33}(OH)₂ with sodium hydroxide to obtain a mixture, where the sodium hydroxide is added based on a molar ratio 1:1.01 of transition metals (including Ni, Fe, and Mn) in the precursor to sodium in the sodium hydroxide.
   (2-2) Calcine the mixture in (2-1) in a muff furnace, where a temperature of high-temperature calcination is 900°C, and calcination time is 6 hours; then decrease the temperature to 700°C and perform calcination for 10 hours, where a calcination atmosphere is a pure oxygen atmosphere; and perform natural cooling after the calcination ends.
   (2-3) Perform vacuum packaging after crushing, sieving, and demagnetizing powder obtained after cooling in (2-2), to obtain the polycrystalline positive electrode material.
3. Preparation of a positive electrode plate:
   The polycrystalline positive electrode material, polyvinylidene fluoride (PVDF), and a conductive agent super P are added to N-methylpyrrolidone (NMP) based on a mass ratio of 90:5:5, a slurry is obtained through full stirring and even mixing, the slurry is coated on an aluminum foil current collector, and the positive electrode plate is prepared through drying, cold pressing, and slitting.
4. Preparation of a sodium ion battery:
   A 2032 button battery is prepared by using the prepared positive electrode plate, a sodium plate, an electrolyte (1 mol/L NaPF₆), and a separator.

### Comparative embodiment 2

For synthesis of the positive electrode material precursor Ni_{0.33}Fe_{0.33}Mn_{0.33}(OH)₂ of the sodium ion battery, a difference between Comparative embodiment 2 and Embodiment 2 only lies in that the magnesium salt solution and the tungsten salt solution in step (3) and step (4) are not added by segment in Comparative embodiment 2, but the magnesium salt solution and the tungsten salt solution are evenly mixed and then added in one step. Other operations are the same. An entire particle of the finally generated precursor Ni_{0.33}Fe_{0.33}Mn_{0.33}(OH)₂ has evenly doped magnesium and tungsten.

According to a method that is the same as that in Embodiment 2, a positive electrode material NaNi_{0.33}Fe_{0.33}Mn_{0.33}O₂ is prepared by using the positive electrode material precursor Ni_{0.33}Fe_{0.33}Mn_{0.33}(OH)₂ in Comparative embodiment 2.

According to a method that is the same as that in Embodiment 2, a positive electrode plate and a sodium ion battery are prepared by using the positive electrode material NaNi_{0.33}Fe_{0.33}Mn_{0.33}O₂ in Comparative embodiment 2.

A particle of the positive electrode material precursor and a particle of the polycrystalline positive electrode material prepared in Embodiment 2 are cut through FIB. Cross sections of the particle of the positive electrode material precursor and the particle of the polycrystalline positive electrode material in Embodiment 2 are observed through EDS, and it can be observed that clear signals of the element tungsten exist on an outer side of the cross sections of the particle of the positive electrode material precursor and the particle of the polycrystalline positive electrode material, and clear signals of the element magnesium exist on an inner side of the cross sections. An SEM is used to observe a cross-sectional morphology feature of the polycrystalline positive electrode material in Embodiment 2. It can be observed that an average particle size of primary particles on an inner side of the cross section of the polycrystalline positive electrode material is significantly greater than an average particle size of primary particles on an outer side, and grain boundary distribution on the outer side of the cross section is significantly denser than grain boundary distribution on the inner side of the cross section.

A particle of the positive electrode material precursor and a particle of the polycrystalline positive electrode material prepared in Comparative embodiment 2 are cut through FIB. Cross sections of the particle of the positive electrode material precursor and the particle of the polycrystalline positive electrode material in Comparative embodiment 2 are observed through EDS, and it can be observed that signals of tungsten and magnesium are evenly distributed on inner and outer sides of the cross sections of the particle of the positive electrode material precursor and the particle of the polycrystalline positive electrode material. An SEM is used to observe a cross-sectional morphology feature of the polycrystalline positive electrode material in Comparative embodiment 2. It can be observed that primary grains on the inner and outer sides of the cross section of the polycrystalline positive electrode material have an even particle size.

Under a condition of 25±5°C, a charge/discharge test is performed, at a charge/discharge rate of 0.1C/0.1C and a charge/discharge rate of 1C/1C within a voltage range of 3.0 V to 4.3 V, on the batteries prepared in Embodiment 2 and Comparative embodiment 2, and first-cycle charge/discharge capacities and retention ratios in 100 cycles that are of the batteries are recorded. A result is shown in Table 2.

**Table 2: Electrochemical performance of batteries in Embodiment 2 and Comparative embodiment 2**

| Sample | 0.1C charge specific capacity | 0.1C discharge specific capacity | 1C/0.1C discharge capacity ratio (rate performance) | 1C capacity retention ratio in 100 cycles |
|---|---|---|---|---|
| Embodiment 2 | 155 mAh/g | 143 mAh/g | 0.89 | 70.3% |
| Comparative embodiment 2 | 152 mAh/g | 136 mAh/g | 0.78 | 63.1% |

It can be learned from the result of Table 2 that, in embodiments of this application, the core layer and the shell layer of the positive electrode material precursor material are doped with different specific elements through step-by-step doping, so that in a process of forming a secondary particle of the polycrystalline positive electrode material, under the action of the specific doping elements, an average particle size of primary particles at an inner layer of the finally obtained polycrystalline positive electrode material can be greater than an average particle size of primary particles at an outer layer, that is, a structure with gradient distribution of the average particle sizes of the primary particles at the inner layer and the outer layer is formed. Compared with an even doping structure in Comparative embodiment 2, the electrode material having the structure with gradient distribution of the average particle sizes of the primary particles at the inner layer and the outer layer in embodiments of this application can effectively resolve a problem of cycle performance deterioration caused by grain boundary cracking of the secondary particle of the electrode material. The positive electrode material in Embodiment 2 of this application has better rate performance and a higher capacity retention ratio compared with that in Comparative embodiment 2.

### Embodiment 3

1. A positive electrode material precursor Ni_{0.82}Co_{0.12}Mn_{0.06}(OH)₂ of a lithium ion battery is synthesized, and includes a core layer and a shell layer that wraps an outer side of the core layer. The core layer is doped with the element strontium (Sr).
   (1-1) Prepare a nickel-cobalt-manganese metal salt solution: Dissolve nickel sulfate salt, cobalt sulfate salt, and manganese sulfate salt at a molar ratio 82:12:6 of Ni, Co, and Mn to prepare a 2-mol/L evenly mixed nickel-cobalt-manganese metal salt solution; prepare an ammonia solution whose mass concentration is 10 wt.% and a sodium hydroxide solution whose concentration is 4 mol/L; and prepare a strontium salt solution whose molar concentration is 0.05 mol/L.
   (1-2) Prepare an ammonia solution whose mass concentration is 10 wt.% and a sodium hydroxide solution whose concentration is 4 mol/L.
   (1-3) Prepare a strontium salt solution whose molar concentration is 0.05 mol/L.
   (1-4) Add deionized water to a reactor, then add the prepared ammonia solution and sodium hydroxide solution to the reactor, adjust a temperature to 70°C, a pH value to 11.0, and a stirring speed to 300 rpm, then slowly add the nickel-cobalt-manganese metal solution and the strontium salt solution prepared in (1-1) and (1-3), and control a pH value of a solution to be 11.0 by using ammonia water.
   (1-5) After a precursor particle grows to a particle size of 7 µm, maintain the temperature to be 70°C, the pH value to be 11.0, and the stirring speed to be 300 rpm, and slowly inject the prepared ammonia solution and sodium hydroxide solution, and the nickel-cobalt-manganese metal solution prepared in (1-1).
   (1-6) After the precursor particle grows to a particle size of 10 µm, performing washing and drying by using a weak alkaline solution and deionized water, to obtain the positive electrode material precursor Ni_{0.82}Co_{0.12}Mn_{0.06}(OH)₂, which includes the core layer and the shell layer that wraps the outer side of the core layer, where the core layer is doped with the element strontium (Sr), and the shell layer is doped with no element.
2. A polycrystalline positive electrode material LiNi_{0.82}Co_{0.12}Mn_{0.06}O₂ is synthesized.
   (2-1) Fully mix the prepared positive electrode material precursor Ni_{0.82}Co_{0.12}Mn_{0.06}(OH)₂ with lithium hydroxide to obtain a mixture, where the lithium hydroxide is added based on a molar ratio 1:1.01 of transition metals (including Ni, Co, and Mn) in the precursor to lithium in the lithium hydroxide.
   (2-2) Calcine the mixture in (2-1) in a muff furnace, where a temperature of high-temperature calcination is 900°C, and calcination time is 6 hours; then decrease the temperature to 700°C and perform calcination for 10 hours, where a calcination atmosphere is a pure oxygen atmosphere; and perform natural cooling after the calcination ends.
   (2-3) Perform vacuum packaging after crushing, sieving, and demagnetizing powder obtained after cooling in (2-2), to obtain the polycrystalline positive electrode material LiNi_{0.82}Co_{0.12}Mn_{0.06}O₂.
3. Preparation of a positive electrode plate:
   The polycrystalline positive electrode material, polyvinylidene fluoride (PVDF), and a conductive agent super P are added to N-methylpyrrolidone (NMP) based on a mass ratio of 90:5:5, a slurry is obtained through full stirring and even mixing, the slurry is coated on an aluminum foil current collector, and the positive electrode plate is prepared through drying, cold pressing, and slitting.
4. Preparation of a lithium ion battery:
   A 2032 button battery is prepared by using the prepared positive electrode plate, a lithium plate, an electrolyte (1 mol/L LiPF₆), and a separator.

### Comparative embodiment 3

For synthesis of the positive electrode material precursor Ni_{0.82}Co_{0.12}Mn_{0.06}(OH)₂ of the lithium ion battery, a difference between Comparative embodiment 3 and Embodiment 3 only lies in that the strontium salt solution in step (3) is not added by segment in Comparative embodiment 3, but the strontium salt solution is continuously added in one step in a precursor synthesis process. Other operations are the same. An entire particle of the finally generated precursor Ni_{0.82}Co_{0.12}Mn_{0.06}(OH)₂ has evenly doped strontium.

According to a method that is the same as that in Embodiment 3, a positive electrode material LiNi_{0.82}Co_{0.12}Mn_{0.06}O₂ is prepared by using the positive electrode material precursor Ni_{0.82}Co_{0.12}Mn_{0.06}(OH)₂ in Comparative embodiment 3.

According to a method that is the same as that in Embodiment 3, a positive electrode plate and a lithium ion battery are prepared by using the positive electrode material LiNi_{0.82}Co_{0.12}Mn_{0.06}O₂ in Comparative embodiment 3.

A particle of the positive electrode material precursor and a particle of the polycrystalline positive electrode material prepared in Embodiment 3 are cut through FIB. Cross sections of the particle of the positive electrode material precursor and the particle of the polycrystalline positive electrode material in Embodiment 3 are observed through EDS, and it can be observed that clear signals of the element Sr exist on an inner side of the cross sections. An SEM is used to observe a cross-sectional morphology feature of the polycrystalline positive electrode material in Embodiment 3. It can be observed that an average particle size of primary particles on an inner side of the cross section of the polycrystalline positive electrode material is significantly greater than an average particle size of primary particles on an outer side, and grain boundary distribution on the outer side of the cross section is significantly denser than grain boundary distribution on the inner side of the cross section.

A particle of the positive electrode material precursor and a particle of the polycrystalline positive electrode material prepared in Comparative embodiment 3 are cut through FIB. Cross sections of the particle of the positive electrode material precursor and the particle of the polycrystalline positive electrode material in Comparative embodiment 3 are observed through EDS, and it can be observed that signals of Sr are evenly distributed on inner and outer sides of the cross sections of the particle of the positive electrode material precursor and the particle of the polycrystalline positive electrode material. An SEM is used to observe a cross-sectional morphology feature of the polycrystalline positive electrode material in Comparative embodiment 3. It can be observed that primary grains on the inner and outer sides of the cross section of the polycrystalline positive electrode material have an even particle size.

Under a condition of 25±5°C, a charge/discharge test is performed, at a charge/discharge rate of 0.1C/0.1C and a charge/discharge rate of 1C/1C within a voltage range of 3.0 V to 4.3 V, on the batteries prepared in Embodiment 3 and Comparative embodiment 3, and first-cycle charge/discharge capacities and retention ratios in 100 cycles that are of the batteries are recorded. A result is shown in Table 3.

**Table 3: Electrochemical performance of batteries in Embodiment 3 and Comparative embodiment 3**

| Sample | 0.1C charge specific capacity | 0.1C discharge specific capacity | 1C/0.1C discharge capacity ratio (rate performance) | 1C capacity retention ratio in 100 cycles |
|---|---|---|---|---|
| Embodiment 3 | 225 mAh/g | 212 mAh/g | 0.92 | 92.6% |
| Comparative embodiment 3 | 216 mAh/g | 196 mAh/g | 0.87 | 84.2% |

It can be learned from the result of Table 3 that, in embodiments of this application, only the core layer of the positive electrode material precursor material is doped with the element Sr through doping, so that in a process of forming a secondary particle of the polycrystalline positive electrode material, under the action of the element Sr, an average particle size of primary particles at an inner layer of the finally obtained polycrystalline positive electrode material can be greater than an average particle size of primary particles at an outer layer, that is, a structure with gradient distribution of the average particle sizes of the primary particles at the inner layer and the outer layer is formed. Compared with an even doping structure in Comparative embodiment 3, the electrode material having the structure with gradient distribution of the average particle sizes of the primary particles at the inner layer and the outer layer in embodiments of this application can effectively resolve a problem of cycle performance deterioration caused by grain boundary cracking of the secondary particle of the electrode material. The positive electrode material in Embodiment 3 of this application has better rate performance and a higher capacity retention ratio compared with that in Comparative embodiment 3.

It should be understood that "first", "second", and various numbers in this specification are merely used for differentiation for ease of description, but are not intended to limit the scope of this application.

In this application, the term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between associated objects.

In this application, "at least one" means one or more, and "a plurality of" means two or more. "At least one of the following items (pieces)" or a similar expression thereof refers to any combination of these items, including a single item (piece) or any combination of a plurality of items (pieces). For example, "at least one (piece) of a, b, or c" or "at least one (piece) of a, b, and c" may indicate: a, b, c, a-b (namely, a and b), a-c, b-c, or a-b-c, where a, b, and c may be singular or plural.

It should be understood that sequence numbers of the foregoing processes do not limit execution sequences in various embodiments of this application. Some or all of the steps may be performed in parallel or in sequence. The execution sequences of the processes should be determined based on functions and internal logic of the processes, and should not be construed as any limitation on the implementation processes of embodiments of this application.

## Claims

1. An electrode material, wherein the electrode material comprises a secondary particle formed by aggregating a plurality of primary particles, the secondary particle comprises an inner layer and an outer layer that wraps an outer side of the inner layer, and an average particle size of primary particles at the inner layer is greater than an average particle size of primary particles at the outer layer.

2. The electrode material according to claim 1, wherein the secondary particle is a spherical or spheroidal particle.

3. The electrode material according to claim 2, wherein a total radial distance between a center of the secondary particle and any point on a surface of the secondary particle is R, the outer layer is an area corresponding to a length of 20%R to 60%R of extension from the surface of the secondary particle to the center, and the inner layer is an area corresponding to a length of 40%R to 80%R of extension from the center of the secondary particle to the surface.

4. The electrode material according to claim 3, wherein the average particle size of the primary particles at the inner layer is 0.01R' to 1.4R', and R' is half of a longest diameter of the secondary particle.

5. The electrode material according to claim 3, wherein the average particle size of the primary particles at the outer layer is 0.001R' to 0.3R', and R' is half of a longest diameter of the secondary particle.

6. The electrode material according to any one of claims 1 to 5, wherein the average particle size of the primary particles at the inner layer is 1.1 to 15 times the average particle size of the primary particles at the outer layer.

7. The electrode material according to any one of claims 1 to 6, wherein the inner layer comprises a doping element that promotes grain growth, and/or the outer layer comprises a doping element that suppresses grain growth.

8. The electrode material according to claim 7, wherein the doping element that promotes grain growth comprises one or more of strontium, cerium, bismuth, and magnesium; and the doping element that suppresses grain growth comprises one or more of boron, phosphorus, titanium, zirconium, niobium, antimony, tantalum, molybdenum, and tungsten.

9. The electrode material according to claim 7 or 8, wherein in the secondary particle, total molar content of the doping element that promotes grain growth and the doping element that suppresses grain growth is 0.1 mol% to 1 mol%.

10. The electrode material according to any one of claims 1 to 9, wherein an average particle size of the primary particles is 10 nm to 60 µm.

11. The electrode material according to any one of claims 1 to 10, wherein an average particle size of the secondary particles is 1 µm to 200 µm.

12. The electrode material according to any one of claims 1 to 11, wherein the electrode material comprises an electrode material of a lithium ion battery, an electrode material of a sodium ion battery, an electrode material of a potassium ion battery, or an electrode material of a magnesium ion battery.

13. The electrode material according to any one of claims 1 to 12, wherein the secondary particle comprises a metal oxide used for a positive electrode of a battery.

14. The electrode material according to claim 13, wherein the metal oxide used for the positive electrode of the battery is a metal oxide used for a positive electrode of the lithium ion battery, a metal oxide used for a positive electrode of the sodium ion battery, a metal oxide used for a positive electrode of the potassium ion battery, or a metal oxide used for a positive electrode of the magnesium ion battery.

15. The electrode material according to claim 14, wherein the metal oxide used for the positive electrode of the lithium ion battery comprises one or more of a lithium cobalt oxide, a lithium nickel oxide, a lithium manganese oxide, a lithium titanium oxide, a lithium iron phosphorus oxide, a lithium nickel cobalt oxide, a lithium nickel manganese oxide, and a nickel cobalt multi-oxide.

16. The electrode material according to any one of claims 7 to 9, wherein an outermost side of the outer layer comprises an oxide of the doping element that suppresses grain growth.

17. The electrode material according to claims 1 to 16, wherein the electrode material further comprises a protective layer that wraps the surface of the secondary particle.

18. An electrode material preparation method, comprising:
after mixing an electrode material precursor with metal salt, obtaining an electrode material through calcination, wherein the electrode material precursor comprises a core layer and a shell layer that wraps the core layer, the core layer comprises a doping element that promotes grain growth, and/or the shell layer comprises a doping element that suppresses grain growth, the electrode material comprises a secondary particle formed by aggregating a plurality of primary particles, the secondary particle comprises an inner layer and an outer layer that wraps the inner layer, and an average particle size of primary particles at the inner layer is greater than an average particle size of primary particles at the outer layer.

19. The preparation method according to claim 18, wherein the calcination comprises first calcination and second calcination that are sequentially performed, a temperature of the first calcination is higher than a temperature of the second calcination, time of the first calcination is 2 to 4 hours, and time of the second calcination is 6 to 14 hours.

20. The preparation method according to claim 19, wherein the temperature of the first calcination is 600°C to 1000°C, and the temperature of the second calcination is 400°C to 800°C.

21. The preparation method according to claim 18, wherein the metal salt comprises lithium salt, sodium salt, potassium salt, or magnesium salt.

22. The preparation method according to claim 18, wherein the electrode material precursor comprises a metal oxide precursor used for a positive electrode of a battery.

23. The preparation method according to claim 22, wherein the metal oxide precursor used for the positive electrode of the battery comprises a hydroxide precursor of a metal oxide, an oxide precursor of a metal oxide, a carbonate precursor of a metal oxide, or an oxyhydroxide precursor of a metal oxide.

24. An electrode material precursor, wherein the electrode material precursor comprises a core layer and a shell layer that wraps the core layer, wherein the core layer comprises a doping element that promotes grain growth, and/or the shell layer comprises a doping element that suppresses grain growth.

25. The electrode material precursor according to claim 24, wherein the electrode material precursor comprises a metal oxide precursor used for a positive electrode of a battery.

26. The electrode material precursor according to claim 25, wherein the metal oxide precursor used for the positive electrode of the battery comprises a hydroxide precursor of a metal oxide, an oxide precursor of a metal oxide, a carbonate precursor of a metal oxide, or an oxyhydroxide precursor of a metal oxide.

27. The electrode material precursor according to any one of claims 24 to 26, wherein the doping element that promotes grain growth comprises one or more of strontium, cerium, bismuth, and magnesium; and the doping element that suppresses grain growth comprises one or more of boron, phosphorus, titanium, zirconium, niobium, antimony, tantalum, molybdenum, and tungsten.

28. An electrode material precursor preparation method, comprising:
mixing a metal source solution of a core layer of an electrode material precursor with a precipitant and a complexing agent, to form a first raw material solution; and performing first co-precipitation reaction on the first raw material solution in an inert atmosphere, to obtain the core layer of the electrode material precursor;
mixing a metal source solution of a shell layer of the electrode material precursor with the precipitant and the complexing agent, to form a second raw material solution, wherein
the first raw material solution further comprises a doping element source that promotes grain growth, and/or the second raw material solution further comprises a doping element source that suppresses grain growth; and
after mixing the second raw material solution with the core layer of the electrode material precursor, performing second co-precipitation reaction in an inert atmosphere, and forming the shell layer on a surface of the core layer of the electrode material precursor, to obtain the electrode material precursor.

29. The preparation method according to claim 28, wherein the doping element source that promotes grain growth comprises a compound containing one or more doping elements of strontium, cerium, bismuth, and magnesium; and the doping element source that suppresses grain growth comprises a compound containing one or more doping elements of boron, phosphorus, titanium, zirconium, niobium, antimony, tantalum, molybdenum, and tungsten.

30. An electrode plate, wherein the electrode plate comprises a current collector and an electrode active layer disposed on a surface of the current collector, and the electrode active layer comprises the electrode material according to any one of claims 1 to 17.

31. A battery, wherein the battery comprises the electrode material according to any one of claims 1 to 17, or comprises the electrode plate according to claim 30.

32. An apparatus, wherein the apparatus comprises the battery according to claim 31.

33. The apparatus according to claim 32, wherein the apparatus comprises an electronic device, an energy storage system, or a vehicle.
